Europäisches Patentamt

European Patent Office

Office européen des brevets

(19)

(11) Veröffentlichungsnummer: **0 291 688**
**B1**

# (12) EUROPÄISCHE PATENTSCHRIFT

(45) Veröffentlichungstag der Patentschrift:
29.08.90

(21) Anmeldenummer: 88105809.3

(22) Anmeldetag: **12.04.88**

(51) Int. Cl.⁵: **B62D 27/06**

(54) Verschluss für abklappbare und auspendelbare Bordwände von Lastfahrzeugen.

(30) Priorität: **18.05.87 DE 8707105 U**
**28.08.87 DE 8711706 U**

(43) Veröffentlichungstag der Anmeldung:
**23.11.88 Patentblatt 88/47**

(45) Bekanntmachung des Hinweises auf die Patenterteilung:
**29.08.90 Patentblatt 90/35**

(84) Benannte Vertragsstaaten:
**AT DE ES FR IT**

(56) Entgegenhaltungen:
**EP-A- 0 027 879**
**AT-B- 325 430**
**DE-A- 2 932 763**

(73) Patentinhaber: **F. HESTERBERG & SÖHNE GmbH & Co. KG, Heilenbecker Strasse 50-60,**
**D-5828 Ennepetal 1(DE)**

(72) Erfinder: **Sterner, Bernd, Bickenstück 14,**
**D-5800 Hagen 1(DE)**
Erfinder: **Feinbier, Joachim, Buntebach 12,**
**D-5828 Ennepetal 15(DE)**

(74) Vertreter: **Kneissl, Richard, Dr. et al, Patentanwälte Andrae, Flach, Haug, Kneissl Steinstrasse 44,**
**D-8000 München 80(DE)**

## Beschreibung

Die Erfindung betrifft einen Verschluß gemäß dem Oberbegriff des Patentanspruches 1.

Ein solcher Verschluß ist aus der DE-PS 2 932 763 bekannt. Nachteilig an diesem Verschluß ist, daß die Herstellungsgenauigkeit nur gewisse Toleranzen zuläßt, um einerseits das Kniegelenk über den Totpunkt hinaus bis zum Anschlag führen zu können und um andererseits eine sichere Selbsthemmung des Verschlusses in dieser Lage zu gewährleisten. Weiterhin hat sich als Nachteil herausgestellt, daß beim Betrieb auftretende Abnutzungserscheinungen nicht ausgeglichen werden können, was zu einem Nachlassen der durch die Übertotpunktlage des Kniegelenks gegebenen Festhaltung der Schließschwinge in der Schließstellung und darüber hinaus zu einem Spiel und Ausschlagen des Pendelzapfens bzw. des Fangmauls führen kann.

Auch aus der EP-PS 27 879 ist ein solcher Verschluß bekannt. Dieser Verschluß ist mit einer Nachstelleinrichtung ausgerüstet, die es ermöglicht, Einbautoleranzen des Verschlusses und evtl. Verschleißerscheinungen auszugleichen. So kann beispielsweise die Betätigungsstange aus zwei ineinander verschraubten Teilen bestehen, so daß die Betätigungsstange durch gegenseitiges Verdrehen dieser beiden Teile verlängert oder verkürzt werden kann. Nachteilig an diesem Verschluß ist, daß zur Berücksichtigung von Einbautoleranzen der Verschluß nach dem Einbau gesondert eingestellt werden muß und daß vor allem beim Betrieb auftretende Abnutzungserscheinungen durch Nachstellen des Verschlusses ausgeglichen werden müssen. Insbesondere der letztere Nachteil ist gravierend, da es sich herausgestellt hat, daß ein solches Nachstellen von Hand nur in den seltensten Fällen durchgeführt wird.

Der Erfindung lag die Aufgabe zugrunde, einen Verschluß der eingangs näher bezeichneten Art so auszubilden, daß er Einbautoleranzen und Abnutzungserscheinungen ohne eigenes Nachstellen selbsttätig ausgleicht. Infolgedessen sollen größere Herstellungstoleranzen möglich sein und Abnutzungserscheinungen nicht zu einem Nachlassen der durch den Übertotpunktüberzug des Kniegelenks gegebenen Selbsthemmung des Verschlusses in Schließstellung bzw. zu einem Ausschlagen des Pendelzapfens oder des Fangmauls führen.

Diese Aufgabe wird gemäß der Erfindung durch die Maßnahmen des Kennzeichens des Patentanspruches 1 gelöst.

Durch die erfindungsgemäße Ausbildung des Verschlusses wird erreicht, daß der Pendelzapfen immer durch die Schließschwinge fest in das Fangmaul gedrückt wird, wodurch ein Ausschlagen des Fangmauls und des Pendelzapfens beim Betrieb vermieden wird. Außerdem werden dadurch größere Herstellungstoleranzen möglich, daß wenigstens ein Kniehebelglied wenigstens eine seiner Anlenkachsen mit einem Langloch umgreift. Wenn sich die Federeinrichtung mit einem Ende am Kniegelenk abstützt, wird dieses bei geschlossenem Verschluß in der Übertotpunktlage gehalten, was eine zusätzliche Sicherung der Schließstellung ergibt.

Bevorzugte Ausführungsformen der Federeinrichtung ergeben sich aus den Ansprüchen 2 und 3. Die Ausführungsform des Anspruchs 3 hat den zusätzlichen Vorteil, daß die Blattfeder nicht nur in der Schließstellung das Kniegelenk in die Übertotpunktlage drückt, sondern auch in der Offenstellung das Kniegelenk und damit die Handhabe in dieser Stellung festhält. Beim Öffnen des Verschlusses wird nämlich die Blattfeder zunächst zusammengedrückt, kann sich aber dann wieder entspannen, wodurch die Festhaltung der Offenstellung des Verschlusses gewährleistet wird.

Durch die Erfindung wird auch bei einem Langwegverschluß gemäß Anspruch 6 erreicht, daß der Pendelzapfen immer durch die Schließschwinge fest in das Fangmaul gedrückt wird, wodurch ein Ausschlagen des Fangmauls und des Pendelzapfens bei Betrieb vermieden wird. Ein Nachstellen von Hand zum Ausgleichen von Einbautoleranzen und Abnutzungserscheinungen ist nicht mehr erforderlich.

Gemäß einer bevorzugten Ausführungsform wird die Lagerung mit einem Spiel des am Oberteil angelenkten Hebelabschnitts dadurch erreicht, daß der Kniehebelabschnitt wenigstens eine seiner Anlenkachsen mit einem Langloch umschließt. Dieses Spiel kann aber auch auf andere Art erreicht werden, beispielsweise dadurch, daß die Achse selbst in einem im Oberteil ausgebildeten Langloch geführt wird.

Gemäß einer anderen bevorzugten Ausführungsform ist die Betätigungsstange unterteilt, wobei die Federeinrichtung aus einer zwischen den Teilen wirkenden Druckfeder besteht. Dabei wird es ebenfalls bevorzugt, daß die Druckfeder in einer Hülse geführt ist. Es sind jedoch auch andere Ausbildungen möglich, solange sie nur im Sinne einer Verlängerung der Betätigungsstange wirken, damit die Schließschwinge fest gegen den Pendelzapfen gedrückt wird.

Verschiedene Ausführungsformen eines erfindungsgemäßen Verschlusses werden nun anhand der beigefügten Zeichnungen näher erläutert. Es zeigt:

Fig. 1 eine Seitenansicht einer ersten Ausführungsform eines erfindungsgemäßen Verschlusses,

Fig. 2 eine Seitenansicht einer zweiten Ausführungsform eines erfindungsgemäßen Verschlusses,

Fig 3 eine Seitenansicht einer dritten Ausführungsform eines erfindungsgemäßen Verschlusses und

Fig. 4 eine teilweise geschnittene und weggebrochene Seitenansicht eines Langwegverschlusses gemäß der Erfindung.

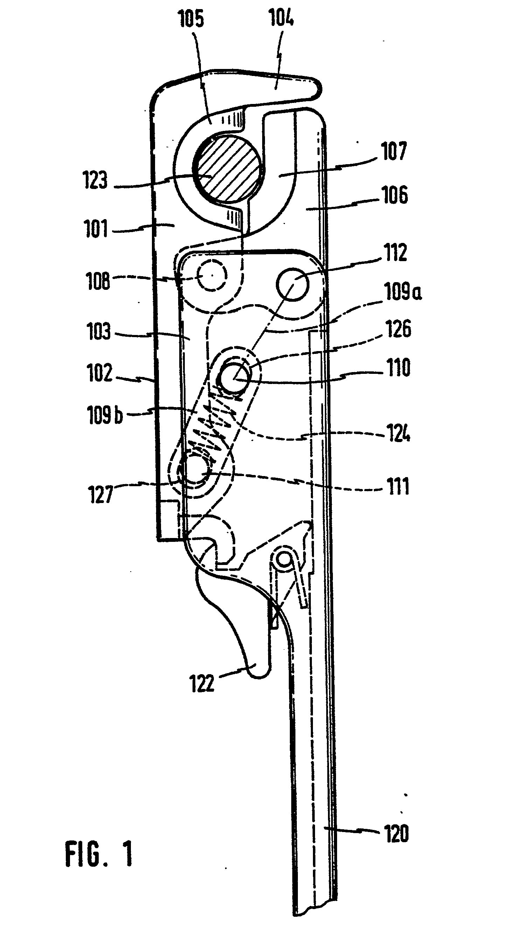

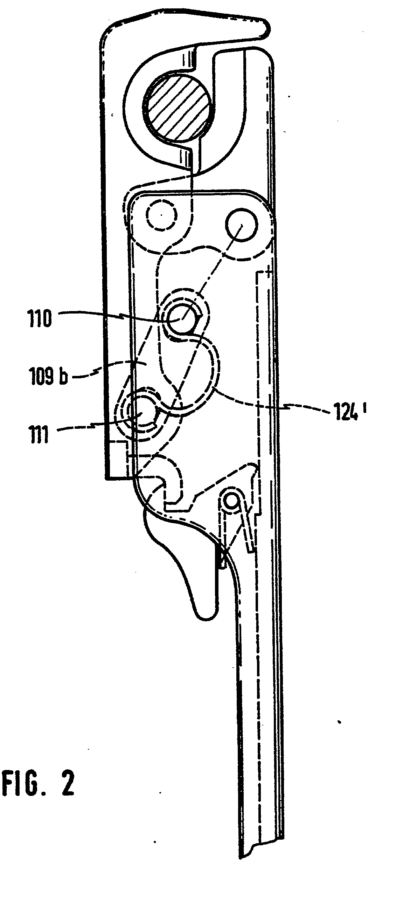

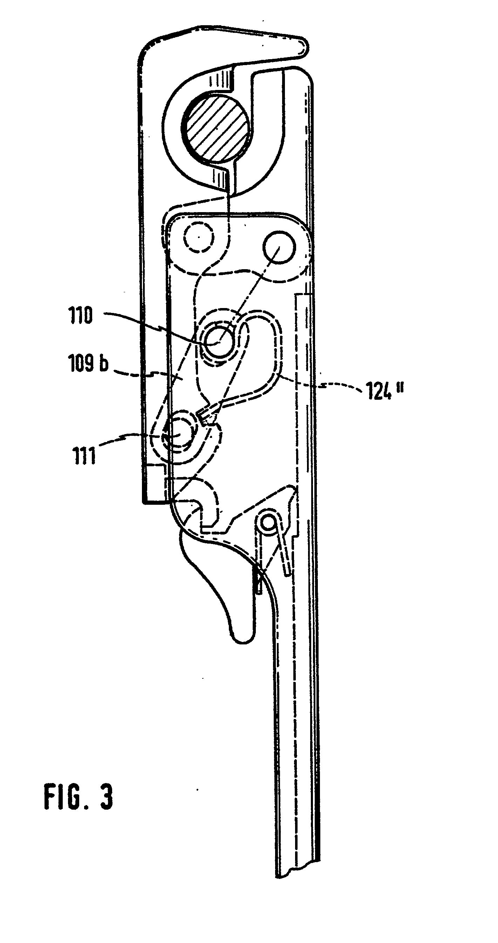

Die in den Fig. 1 bis 3 dargestellten Verschlüsse besitzen ein Grundteil 101, welches aus einer Grundplatte 102 mit abstehenden und parallel zueinander verlaufenden Seitenwandungen 103 gebildet ist. Die Grundplatte 102 geht an der Oberseite in ein Fangmaul 104 für einen an der Bordwand anzubringenden Pendelzapfen 123 über. Das Fangmaul 104 ist mit einer Anschrägung 105 zur Erleichterung des Einfangens des Pendelzapfens 123 ausgerüstet. Eine Schließschwinge 106, die ebenfalls eine Anschrägung 107 zur Erleichterung des Einfangens des Pendelzapfens 123 aufweist, ist mittels einer Achse 108 schwenkbar am Grundteil 101 gelagert. Das Fangmaul 104 und die Schließschwinge 106 umfassen den Pendelzapfen 123, der so dimensioniert ist, daß die Schließschwinge 106 im geschlossenen Zustand nicht am Fangmaul 104 anliegt. Ein Kniehebel 109a, 109b mit einem Kniegelenk 110 ist einerseits mit einer Achse 111 in den Seitenwandungen 103 und andererseits mit einer Achse 112 an der Schließschwinge 106 angelenkt. Das Kniehebelglied 109a ist über das Kniegelenk 110 hinaus verlängert und dort als Handhabe 120 ausgebildet. Das Kniehebelglied 109b des Kniehebels besitzt Langlöcher 126 und 127, mit denen es die Anlenkachsen 110 bzw. 111 umfaßt. Der Handhebel 120 (und damit das Kniehebelglied 109a) sind als U-Profil gestaltet und überdecken den Betätigungsmechanismus für die Schließschwinge von drei Seiten. Dadurch, daß dieses Teil an der Grundplatte 102 anliegt, wird eine Abstützung für das Kniegelenk 110 in der Übertotpunktlage bezüglich der Anlenkachsen 111 und 112 erreicht. Gemäß Figur 1 drückt eine Druckschraubenfeder 124 die beiden Achsen 110 und 111 auseinander, wodurch nicht nur die das Kniegelenk bildende Achse 110 in der Übertotpunktlage gehalten sondern auch die Schließschwinge 106 fest gegen den Pendelzapfen 123 gedrückt wird. Gemäß Figur 2 besorgt das gleiche eine Blattfeder 124'. Bei der Ausführungsform von Figur 3 ist eine Blattfeder 124'' vorgesehen, die mit einem Ende in einer Kerbe des Grundteils 101 gelagert ist und mit dem anderen Ende die Kniegelenkachse 110 umgreift. Es ist ersichtlich, daß wegen des gewählten Abstützpunktes der Blattfeder 124'' am Grundteil 101 beim Öffnen des Verschlusses diese zunächst zusammengedrückt wird, sich aber dann wieder ausdehnen kann und dadurch den Verschluß in die Offenstellung drückt.

Eine Wippe 122, die in der Handhabe 120 gelagert ist, sorgt für eine zusätzliche Sicherung des Verschlusses in Schließstellung.

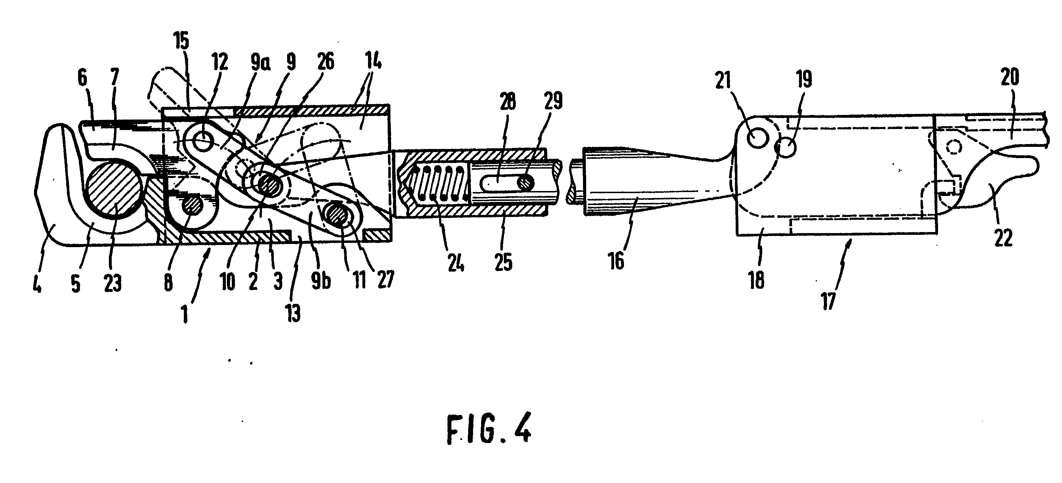

Der in Fig. 4 dargestellte Langwegverschluß besitzt ein Oberteil 1, welches aus einer Grundplatte 2 mit seitlich abstehenden und parallel zueinander verlaufenden Seitenwandungen 3 gebildet ist. Die Grundplatte 2 und die Seitenwandungen 3 gehen an der Oberseite in ein Fangmaul 4 für einen an der Bordwand anzubringenden Pendelzapfen über. Das Fangmaul 4 ist mit einer Anschrägung 5 zur Erleichterung des Einfangens des Pendelzapfens ausgerüstet. Eine Schließschwinge 6, die ebenfalls eine Anschrägung 7 zur Erleichterung des Einfangens des Pendelzapfens aufweist, ist mittels einer Achse 8 schwenkbar im Oberteil 1 gelagert. Das Fangmaul 4 und die Schließschwinge 6 umfassen einen Pendelzapfen 23, der so dimensioniert ist, daß die Schließschwinge 6 im geschlossenen Zustand nicht am Fangmaul 4 anliegt. Ein Kniehebel 9, 9a, 9b mit einem Kniegelenk 10 ist einerseits mit einer Achse 11 in den Seitenwandungen 3 und andererseits mit einer Achse 12 an der Schließschwinge 6 angelenkt. Der Kniehebelabschnitt 9b des Kniehebels besitzt Langlöcher 26 und 27, mit denen dieser Kniehebelabschnitt die Anlenkachsen 10 bzw. 11 umfaßt. Die Grundplatte 2 besitzt eine Ausnehmung 13, damit die Achse 11 soweit wie möglich an die Grundplatte herangedrückt werden kann. Die Kniegelenkachse 10 springt an beiden Seiten etwas über den Kniehebel vor. Diese Vorsprünge liegen in Schließstellung an den Stirnseiten der Wandungen 3 an. Der ganze Mechanismus ist durch eine U-förmige Haube 14 abgedeckt. Die Haube besitzt an ihrer Vorderseite eine Ausnehmung 15, damit die Schließschwinge 6 ausschwingen kann.

Am Kniegelenk 10 des Oberteils 1 ist eine Betätigungsstange 16 angelenkt und mit einem Unterteil 17 verbunden. Die Betätigungsstange 16 ist unterteilt. Der dem Oberteil zugewandte Abschnitt besitzt dabei einen größeren Durchmesser und weist auf seiner Unterseite eine Hülse 25 auf, die mit einem Gleitsitz über den unteren Abschnitt der Betätigungsstange hinübergreift. In dieser Hülse ist eine Druckschraubenfeder 24 angeordnet, welche im Sinne einer Verlängerung der Betätigungsstange wirkt. Damit die beiden Teile der Betätigungsstange 16 insbesondere vor dem Einbau nicht auseinanderfallen, ist im unteren Abschnitt der Betätigungsstange ein Langloch 28 vorgesehen, durch welches ein in der Hülse 25 gelagerter Bolzen 29 hindurchgeht. Das Unterteil 17 besteht aus einem vorne offenen U-förmigen Profil 18, in dem über eine Achse 19 eine Handhabe 20 angelenkt ist. Oberhalb der Achse 19 ist die Betätigungsstange 16 über eine Achse 21 an der Handhabe 20 angelenkt. Die Handhabe ist in der Schließstellung durch einen Einrastmechanismus 22 gesichert. Die Schließstellung des erfindungsgemäßen Verschlusses ist nicht nur durch den Einrastmechanismus 22 gesichert, sondern noch weitere zwei Mal durch jeweils einen Totpunktüberzug im Oberteil 1 und im Unterteil 17. In dieser Stellung ist nämlich sowohl das Kniegelenk 10 im Oberteil 1 als auch die Achse 21 im Unterteil 17 an einer Übertotpunktlage, so daß die Schließstellung bei der dargestellten Ausführungsform insgesamt dreifach gesichert ist.

## Patentansprüche

1. Verschluß für abklappbare und auspendelbare Bordwände von Lastfahrzeugen zum Anbringen an ein festes Aufbauelement, mit einem Grundteil (1, 101), das ein Fangmaul (4, 104) für die Aufnahme eines Pendelzapfens (23, 123) aufweist, mit einer am Grundteil (1, 101) angelenkten Schließschwinge (6, 106) sowie mit einem Betätigungsmechanismus für die Schließschwinge (6, 106), wobei der Betätigungsmechanismus aus einem einerseits am Grundteil (101) und andererseits an der Schließschwinge (6, 106) angelenkten Kniehebel (109a, 109b) besteht, dessen mittels einer Handhabe (20, 120) bewegbares Kniegelenk (10, 110) sich in der Schließstellung in einer Übertotpunktlage befindet und an einem Anschlag (2, 102) abgestützt ist, dadurch gekennzeichnet, daß wenigstens ein Kniehebelglied (9a, 9b, 109a, 109b) des Kniehebels (9a, 9b, 109a, 109b) wenigstens an einer seiner Anlenkachsen (10, 11, 110, 111, 112) mit einem Spiel gelagert ist, daß eine Federeinrichtung (24, 124, 124', 124") vorgesehen ist, die den mit Spiel gelagerten Kniehebelabschnitt (9a, 9b, 109a, 109b) so beaufschlagt, daß die Schließschwinge (6, 106) in der Schließstellung dauernd an dem Pendelzapfen (23, 123) anliegt, wobei die Schließschwinge (6, 106) in der Schließstellung nicht am Fangmaul (4, 104) anliegt.

2. Verschluß nach Anspruch 1, dadurch gekennzeichnet, daß die Federeinrichtung aus einer zwischen den Anlenkachsen (110, 111 bzw. 110, 112) eines Kniehebelglieds (109b bzw. 109a) wirkenden Druckschraubenfeder (124) oder Blattfeder (124') besteht.

3. Verschluß nach Anspruch 1, dadurch gekennzeichnet, daß die Federeinrichtung aus einer Blattfeder (124") besteht, die mit einem Ende am Kniegelenk (110) angreift und sich mit dem anderen Ende am Grundteil (101) abstützt, wobei die Abstützung des anderen Endes der Blattfeder (124") am Grundteil (101) in einem Bereich zwischen den Anlenkachsen (110, 111) des am Grundteil (101) angelenkten Kniehebelglieds (109b) und vorderhalb der Verbindungslinie zwischen den genannten Anlenkachsen (110, 111) ist.

4. Verschluß nach einem der vorhergehenden Ansprüche, ·dadurch gekennzeichnet, daß der mit Spiel gelagerte Kniehebelabschnitt (109a, 109b) wenigstens ein Langloch (126, 127) an der entsprechenden Anlenkachse (110, 111, 112) für die Bildung des Spiels hat.

5. Verschluß nach einem der vorhergehenden Ansprüche, dadurch gekennzeichnet, daß das an der Schließschwinge (106) angelenkte Kniehebelglied (109a) über das Kniegelenk (110) hinaus als Handhabe (120) verlängert ist.

6. Verschluß nach Anspruch 1, wobei das Grundteil ein Oberteil (1) ist, welches das Fangmaul (4) für die Aufnahme des Pendelzapfens (23), die Schließschwinge (6) sowie den Betätigungsmechanismus für die Schließschwinge aufweist, und ein Unterteil (17) vorgesehen ist, das einen schwenkbar gelagerten Handhebel (20) als Handhabe aufweist, wobei der Betätigungsmechanismus mit dem Handhebel über· eine Betätigungsstange (16) verbunden ist und in Schließstellung sich die Anlenkstelle (21) der Betätigungsstange (16) am Handhebel (20) bezüglich dessen Anlenkstelle (19) am Unterteil (17) in einer Übertotpunktlage befindet, und wobei weiterhin der Betätigungsmechanismus aus dem einerseits am Oberteil (1) und andererseits an der Schließschwinge (6) angelenkten Kniehebel (9a, 9b) besteht, an dessen Kniegelenk (10) die Betätigungsstange (16) angreift, dadurch gekennzeichnet, daß der am Oberteil (1) angelenkte Abschnitt (9b) des Kniehebels (9a, 9b) wenigstens an einer seiner Anlenkachsen (10, 11) mit einem Spiel gelagert ist, und die Betätigungsstange (16) die Federeinrichtung (24) aufweist, die im Sinne einer Verlängerung der Betätigungsstange (16) wirkt.

7. Verschluß nach Anspruch 6, dadurch gekennzeichnet, daß der am Oberteil (1) angelenkte Abschnitt (9b) des Kniehebels (9a, 9b) wenigstens seiner Anlenkachsen (10, 11) mit einem Langloch umschließt.

8. Verschluß nach Anspruch 6 oder 7, dadurch gekennzeichnet, daß die Betätigungsstange (16) unterteilt ist und die Federeinrichtung aus einer zwischen den Teilen wirkenden Druckfeder (24) besteht.

9. Verschluß nach Anspruch 8, dadurch gekennzeichnet, daß die Druckfeder (24) in einer Hülse (25) geführt ist.

## Claims

1. Fastener for downwardly and outwardly pivotal sideboards of truck vehicles for attaching to a fixed body element, comprising a base member (1, 101) which has a catch mouth (4, 104) for receiving a pendulum pin (23, 123), a closure pivot arm (6, 106) articulately connected to the base member (1, 101) and an actuating mechanism for the closure pivot arm (6, 106), the actuating mechanism consisting of a toggle lever (109a, 109b) which is articulately connected on the one hand to the base member (101) and on the other to the closure pivot arm (6, 106) and the toggle joint (10, 110) of which movable by a grip (20, 120) is disposed in the closure position in an over-deadcentre position and bears on a stop (2, 102), characterized in that at least one toggle lever member (9a, 9b, 109a, 109b) of the toggle lever (9a, 9b, 109a, 109b) is mounted at least at one of its articulation pins (10, 11, 110, 111, 112) with play, that a spring means (24, 124, 124', 124") is provided which acts on the toggle lever section (9a, 9b, 109a, 109b) mounted with play in such a manner that the closure pivot arm (6, 106) bears in the closure position permanently on the pendulum pin (23, 123), the closure pivot arm (6, 106) not bearing on the catch mouth (4, 104) in the closure position.

2. Fastener according to claim 1, characterized in that the spring means consists of a helical pressure spring (124) or lever spring (124') acting between the articulation pins (110, 111; 110, 112) of a toggle lever member (109b; 109a).

3. Fastener according to claim 1, characterized in that the spring means consists of a lever spring (124") which engages with one end on the toggle joint (110) and bears with the other end on the base member (101), the bearing of the other end of the lever spring (124") on the base member (101) being in a region between the articulation pins (110, 111) of the toggle lever (109b) articulately connected to the base member (101) and forwardly of the connecting line between said articulation pins (110, 111).

4. Fastener according to any one of the preceding claims, characterized in that the toggle lever section (109a, 109b) mounted with play comprises at least one slot (126, 127) at the corresponding articulation pin (110, 111, 112) for forming the play.

5. Fastener according to any one of the preceding claims, characterized in that the toggle lever member (109a) articulately connected to the closure pivot arm (106) is lengthened as grip (120) beyond the toggle joint (110).

6. Fastener according to claim 1, the basic member being an upper portion (1) which comprises the catch mouth (4) for receiving the pendulum pin (23), the closure pivot arm (6) and the actuating mechanism for the closure pivot arm, and a lower portion (17) being provided which as grip comprises a pivotally mounted hand lever (20), the actuating mechanism being connected to the hand lever via an actuating rod (16) and in the closure position the articulation point (21) of the actuating rod (16) on the hand lever (20) being disposed with respect to its articulation point (19) at the lower portion (17) in an over-deadcentre position, and furthermore the actuating mechanism consisting of the toggle lever (9a, 9b) which is articulately connected on the one hand to the upper portion (1) and on the other to the closure pivot arm (6) and the toggle joint (10) of which engages the actuating rod (16), characterized in that the section (9b) of the toggle lever (9a, 9b) articulately connected to the upper portion (1) is mounted at least at one of its articulation pins (10, 11) with play and the articulation rod (16) comprises the spring means (24) acting in the sense of extending the actuating rod (16).

7. Fastener according to claim 6, characterized in that the section (9b) of the toggle lever (9a, 9b) articulately connected to the upper portion (1) surrounds at least one of its articulation pins (10, 11) with a slot.

8. Fastener according to claim 6 or 7, characterized in that the actuating rod (16) is divided and the spring means consists of a pressure spring (24) acting between the parts.

9. Fastener according to claim 8, characterized in that he pressure spring (24) is guided in a sleeve (25).

## Revendications

1. Verrou pour ridelle rabattable et immobilisable de camion, destiné à être monté sur un élément fixe du châssis et comportant un élément de base (1, 101), qui comporte une mâchoire (4, 104) destinée à serrer une broche pendante (23, 123), une biellette (6, 106) de fermeture qui est articulée sur cet élément de base (1, 101), ainsi qu'un mécanisme de manœuvre de cette biellette (6, 106), ce mécanisme de manœuvre étant une genouillère (109a, 109b), qui est articulée, d'une part sur l'élément de base (101) et d'autre part sur ladite biellette (6, 106) et dont le pivot d'articulation (10, 110), déplaçable au moyen d'une poignée (20, 120), se trouve dans l'état de dépassement du point mort dans sa position de fermeture et est appliqué contre un appui (2, 102), verrou caractérisé en ce qu'au moins un bras (9a, 9b, 109a, 109b) de la genouillère (9a, 9b, 109a, 109b) est monté avec du jeu sur au moins l'un de ses axes d'articulation (10, 11; 110, 111, 112); et en ce que le verrou comporte un dispositif (124, 124', 124'') de rappel élastique qui sollicite le bras de genouillère (9a, 9b; 109a, 109b), monté avec du jeu, de façon que la biellette (6, 106) soit appliquée en permanence, dans sa position de fermeture, contre la broche (23, 123), cette biellette (6, 106) n'étant pas appliquée contre la mâchoire (4, 104) dans cette position de fermeture.

2. Verrou selon la revendication 1, caractérisé en ce que le dispositif de rappel élastique est un ressort hélicoïdal (124) de poussée, ou une lamelle élastique (124'), agissant entre les axes (110, 111 ou 110, 112) d'articulation de l'un des bras (109b ou 109a) de la genouillère.

3. Verrou selon la revendication 1, caractérisé en ce que le dispositif de rappel élastique est une lamelle élastique (124''), dont une extrémité est en prise avec le pivot (110) d'articulation de la genouillère et dont l'autre extrémité s'appuie contre l'élément de base (101), le point d'appui de cette autre extrémité de la lamelle (124'') sur l'élément de base (101) se trouvant entre les axes d'articulation (110, 111) du bras (109b) de genouillère articulé sur cet élément de base (101) et en avant de la ligne droite qui passe par ces axes (110, 111).

4. Verrou selon l'une des revendications précédentes, caractérisé en ce que le bras (109a, 109b) de genouillère qui est monté avec du jeu comporte au moins une boutonnière (126, 127) sur l'axe (110, 111, 112) d'articulation correspondant pour créer le jeu.

5. Verrou selon l'une des revendications précédentes, caractérisé en ce que le bras (109a) de genouillère, qui est articulé sur la biellette (106) de fermeture, est prolongé en constituant une poignée (120) au-delà du pivot (110) d'articulation de cette genouillère.

6. Verrou selon la revendication 1, dans lequel l'élément de base est un élément supérieur (1), qui comporte la mâchoire (4) de prise de la broche pendante (23), la biellette (6) de fermeture ainsi que le mécanisme de manœuvre de cette biellette; et il existe un élément inférieur (17), qui comporte comme poignée un levier (20) manuel monté pivotant, le mécanisme de manœuvre étant relié à ce levier par une tige (16) de manœuvre et, dans la position de fermeture, le point (21) d'articulation de cette tige (16) sur ledit levier (20) se trouvant en situation de dépassement du point mort par rapport au point (19) d'articulation de ce levier (20) sur l'élément inférieur (17), le mécanisme de manœuvre étant par ailleurs constitué par une genouillère (9a, 9b) qui est articulée, d'une part sur l'élément supérieur (1) et d'autre part sur la biellette (6) de fermeture et avec le pivot (10) de laquelle la tige (16) de manœuvre est en prise, verrou caractérisé en ce que le bras (9b) de la genouillère (9a, 9b), qui est articulé sur l'élément supérieur (1), est monté avec du jeu sur au moins l'un de ses axes d'articulation (10, 11), et la tige (16) de manœuvre porte le dispositif (24) de rappel élastique, lequel agit dans le sens de l'allongement de cette tige (16) de manœuvre.

7. Verrou selon la revendication 6, caractérisé en ce que le bras (9b) de la genouillère (9a, 9b), qui est articulé sur l'élément supérieur (1), comporte au moins une boutonnière entourant l'un de ses axes (10, 11) d'articulation.

8. Verrou selon la revendication 6 ou 7, caractérisé en ce que la tige (16) de manœuvre est subdivisée en deux parties, le dispositif de rappel élastique étant un ressort (24) de poussée qui agit entre ces parties.

9. Verrou selon la revendication 6, caractérisé en ce que le ressort (24) est guidé dans une douille (25).

FIG. 1

FIG. 2

110

109 b

111

124 "

FIG. 3

FIG.4

EP 0 291 688 B1